(19)

Europäisches
Patentamt
European
Patent Office
Office européen
des brevets

(11) **EP 4 542 320 A1**

(12) **EUROPEAN PATENT APPLICATION**
published in accordance with Art. 153(4) EPC

(43) Date of publication:
**23.04.2025 Bulletin 2025/17**

(21) Application number: **23823583.2**

(22) Date of filing: **16.05.2023**

(51) International Patent Classification (IPC):
**G05B 19/418** (2006.01)

(52) Cooperative Patent Classification (CPC):
**G05B 19/418**

(86) International application number:
**PCT/JP2023/018194**

(87) International publication number:
**WO 2023/243282 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.06.2022 JP 2022097668**

(71) Applicant: **OMRON Corporation
Kyoto 600-8530 (JP)**

(72) Inventors:
• **NOMURA, Taisuke
  Kyoto-shi, Kyoto 600-8530 (JP)**
• **FUJII, Toru
  Kyoto-shi, Kyoto 600-8530 (JP)**
• **HATTORI, Reiko
  Kyoto-shi, Kyoto 600-8530 (JP)**

(74) Representative: **Becker, Eberhard
Becker Kurig & Partner
Patentanwälte mbB
Bavariastraße 7
80336 München (DE)**

(54) **ABNORMALITY ASSESSMENT DEVICE, ABNORMALITY ASSESSMENT METHOD, AND
ABNORMALITY ASSESSMENT PROGRAM**

(57) An abnormality assessment device according to the present invention comprises a measuring means that measures a plurality of factors affecting the quality of a product produced in a production facility, a control unit, and a storage unit, wherein the storage unit stores: a causality model that specifies a causal relationship among the factors on the basis of features calculated from the factors when normal products are produced at the production facility; a predictive formula that accepts at least one of the features as input and outputs another feature different from the input on the basis of the causality model; and a predicted range of the output. The control unit is configured to determine whether the feature obtained as the output is within the predicted range from among the features calculated from the factors measured in the production process of the production facility.

FIG. 4

## Description

Technical Field

The present invention relates to an abnormality determination device, an abnormality determination method, and an abnormality determination program.

Description of Related Art

As a method for monitoring facility status, Patent Literature 1 discloses a system that effectively utilizes a causal relationship model obtained from manufacturing process data and facilitates verification using domain knowledge.

Related Art

Patent Literature

Patent Literature 1: Japanese Patent Application Laid-Open No. 2018-181158

SUMMARY

Technical Problem

However, the above-mentioned method assumes that a certain degree of domain knowledge is possessed regarding phenomena that affect quality. Therefore, it is considered difficult to use for non-skilled persons or newly occurring phenomena. The present invention has been made to solve the problem and aims to provide an abnormality determination device, an abnormality determination method, and an abnormality determination program that enable even non-skilled persons to easily identify factors related to abnormalities that may occur in a production facility.

Solution to the Problem

The abnormality determination device according to a first aspect of the present invention includes a measuring means for measuring multiple factors that affect the quality of a product produced in a production facility, a control unit, and a storage unit. The storage unit stores a causal relationship model that identifies causal relationships between the factors based on features calculated from the factors during production of normal products in the production facility, a predictive formula that takes at least one of the features as input and another of the features different from the input as output based on the causal relationship model, and a predicted range of the output. The control unit is configured to determine whether the feature that becomes the output among the features calculated from the factors measured in a production process of the production facility is within the predicted range.

The abnormality determination device according to a second aspect, in the abnormality determination device according to the first aspect, is configured to notify the factor related to the feature in the case where the feature that becomes the output is outside the predicted range.

The abnormality determination device according to a third aspect, in the abnormality determination device according to the second aspect, is configured to calculate a degree of deviation of the feature from the predicted range.

The abnormality determination device according to a fourth aspect, in the abnormality determination device according to the third aspect, further includes a display device, and the control unit is configured to display the notified factor and the degree of deviation corresponding to the factor.

The abnormality determination device according to a fifth aspect, in the abnormality determination device according to any one of the first to fourth aspects, is configured such that the control unit performs the determination using the features of a set of the measured factors.

The abnormality determination device according to a sixth aspect, in the abnormality determination device according to any one of the first to fifth aspects, is characterized in that the predicted range is defined based on a width of variation of multiple features derived from multiple normal data (for example, the variation of the predictive formula described later).

The abnormality determination device according to a seventh aspect, in the abnormality determination device according to any one of the first to fifth aspects, outputs another factor of which value exceeds the predicted range based on factor data in products determined to be abnormal. This enables the estimation of the cause of the abnormality.

The abnormality determination method according to an eighth aspect of the present invention includes: a step of identifying, among features calculated from multiple factors that affect the quality of a product produced in a production facility, causal relationships between the factors from the features calculated during production of the product which is normal and generating a causal relationship model; a step of generating a predictive formula based on the causal relationship model, with at least one of the features as input and another of the features different from the input as output; a step of generating a predicted range for the output; a step of calculating the features from the factors measured in a production process of the production facility; and a step of determining whether the feature that becomes the output among the features calculated is within the predicted range.

The abnormality determination program according to a ninth aspect of the present invention causes a computer to execute: a step of identifying, among features calculated from multiple factors that affect the quality of a product produced in a production facility, causal relationships between the factors from the features calculated during production of the product which is normal and generating a causal relationship model; a step of generating a predictive formula based on the causal relationship model, with at least one of the features as input and another of the features different from the input as output; a step of generating a predicted range for the output; a step of calculating the features from the factors measured in a production process of the production facility; and a step of determining whether the feature that becomes the output among the features calculated is within the predicted range.

Effects

According to the present invention, factors related to abnormalities that may occur in a production facility can be easily identified even by non-skilled persons.

BRIEF DESCRIPTION OF THE DRAWINGS

FIG. 1 is a block diagram schematically illustrating an example of a production system to which the present invention is applied.
FIG. 2A is a schematic diagram of a bonding mechanism included in a production facility according to an embodiment of the present invention.
FIG. 2B is a diagram illustrating the operation of the bonding mechanism.
FIG. 3A is a diagram illustrating a case where an abnormality occurs in the bonding mechanism.
FIG. 3B is a diagram describing the operation of the bonding mechanism in which an abnormality has occurred.
FIG. 4 is a block diagram showing the hardware configuration of an abnormality determination device according to an embodiment of the present invention.
FIG. 5 is a block diagram showing the functional configuration of the abnormality determination device.
FIG. 6 is an example of a causal relationship model.
FIG. 7 is a diagram showing an example of a predictive formula.
FIG. 8 is a diagram showing an example of a predicted range.
FIG. 9 is a diagram describing the determination of abnormality.
FIG. 10 is an example of a degree of deviation displayed on the display device.

DESCRIPTION OF EMBODIMENTS

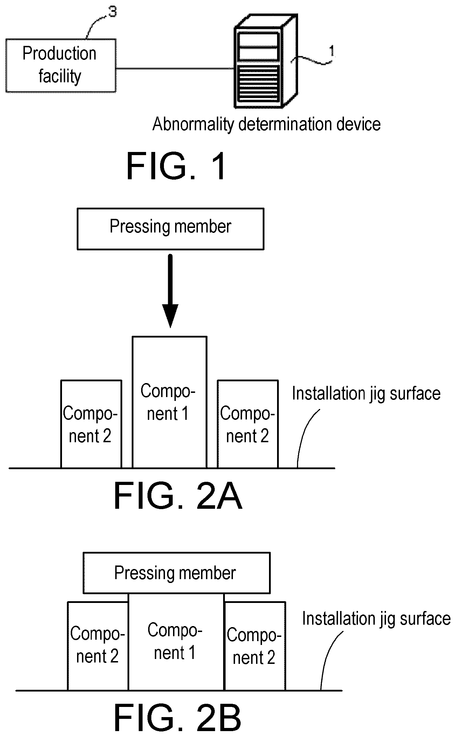

The following describes an embodiment of an abnormality determination device related to the present invention applied to a production facility having a bonding mechanism, with reference to the drawings. FIG. 1 is a block diagram of a production system including the abnormality determination device and the production facility according to the embodiment. In the embodiment, an abnormality determination device 1 is configured to determine whether an abnormality has occurred in the bonding mechanism included in a production facility 3.

<1. Overview of bonding mechanism>

As shown in FIG. 2A, the bonding mechanism included in the production facility 3 has a bonding mechanism for bonding a cylindrical component 1 and a tubular component 2 disposed on an installation jig surface. In an initial state, the component 1 is inserted into a through-hole of the component 2. The component 1 is higher than the component 2 and protrudes upward from the through-hole of the component 2. From the state, as shown in FIG. 2B, by lowering a pressing member by a predetermined descent distance using a servo motor or the like to press the upper surface of the component 1, the component 1 undergoes plastic deformation. In other words, as the length of the component 1 in an up-down direction decreases, the length thereof in a radial direction increases. As a result, the outer circumferential surface of the component 1, which has increased in the radial direction, is bonded to the inner circumferential surface of the through-hole of the component 2 by frictional force.

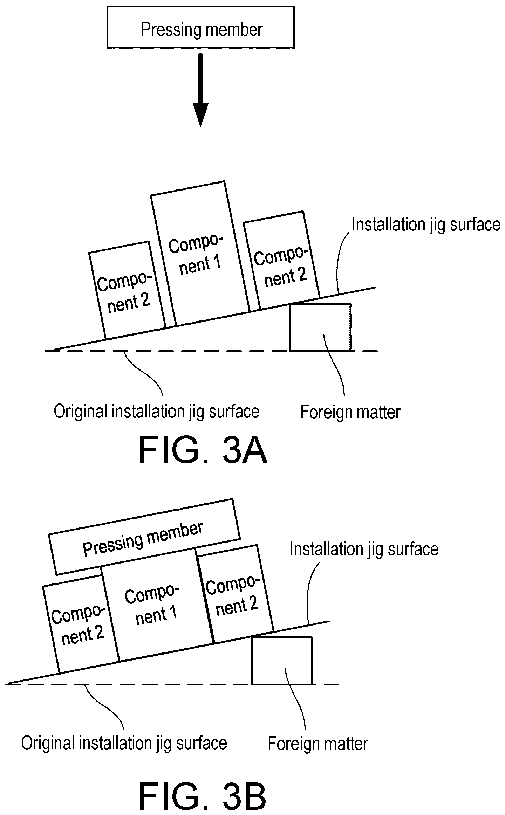

When the bonding mechanism is operating normally, the component 1 and the component 2 are bonded as described above. However, for example, as shown in FIG. 3A, in the case where the installation jig surface of the component 1 and the component 2 is tilted due to the intrusion of foreign matter, as shown in FIG. 3B, when the pressing member presses the component 1, the pressing member may come into contact with the component 2 before reaching the intended descent distance, causing the pressing to stop. This results in a malfunction (abnormality) in which the component 1 cannot be bonded to the component 2. In the embodiment, the determination of the occurrence of such abnormalities is described.

In the bonding mechanism of the embodiment, as an example, the pressing force (N) of the pressing member, the descent speed (mm/s) of the pressing member, the component height (mm) which is the height of the component 1 after bonding, the bonding strength (N) between the component 1 and the component 2, and the difference in height (mm) between the component 1 and the component 2 after bonding, that is, the component step (mm), are used as factors. The aforementioned are extracted from the bonding mechanism as operational status data. Among the aforementioned, the pressing force, the component height, and the pressing force are predetermined and input into a computer such as a PLC that controls the operation of the bonding mechanism. On the other hand, the descent time, the bonding strength, and the component step are measured in real time or subsequently in the bonding mechanism and sent to the abnormality determination device 1 as operational status data. Therefore, the bonding mechanism is provided with sensors and the like for measuring each of the factors. It should be noted that in the case where each of the factors is measured subsequently, it is not needed to provide the bonding mechanism with sensors and the like.

<2. Abnormality determination device>

<2-1. Hardware configuration>

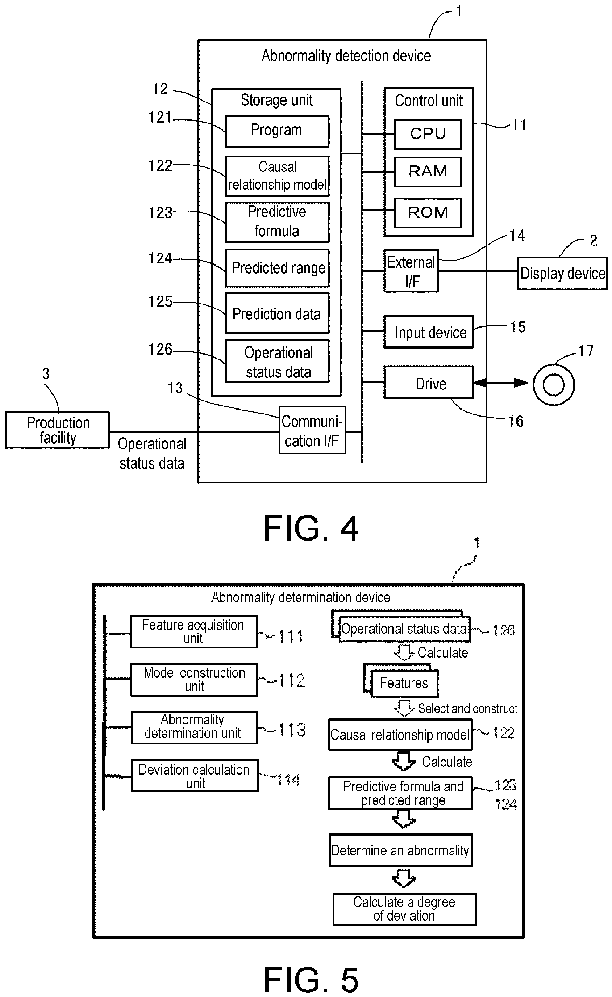

Next, an example of the hardware configuration of the abnormality determination device 1 according to the embodiment is described. FIG. 4 is a block diagram showing the hardware configuration of the abnormality determination device. As shown in FIG. 4, the abnormality determination device 1 is a computer in which a control unit 11, a storage unit 12, a communication interface 13, an external interface 14, an input device 15, and a drive 16 are electrically connected.

The control unit 11 includes a Central Processing Unit (CPU), Random Access Memory (RAM), Read Only Memory (ROM), etc., and performs control of each of components in response to information processing. The storage unit 12 is, for example, an auxiliary storage device such as a hard disk drive or solid-state drive, and stores a program 121 executed by the control unit 11, a causal relationship model 122, a predictive formula 123, a predicted range 124, prediction data 125, and operational status data 126, etc.

The program 121 is a program for calculating features from the operational status data extracted from the production facility 3, generating a causal relationship model between factors from the features, and performing abnormality determination, etc.

The features targeted by the causal relationship model 122 are based on factors that affect the quality of a product produced in the bonding mechanism, and the causal relationships between factors when products are normally produced are constructed as a causal relationship model. In the abnormality determination device 1, the causal relationship model 122 is generated by features calculated from the aforementioned operational status data, but a causal relationship model that has been generated in advance by an external device may also be stored.

The predictive formula 123 is used to calculate other features that are not input from the features that serve as input among the obtained features, and is generated based on the causal relationship model 122. The predicted range 124 is a statistically defined range of output obtained from the predictive formula 123. The prediction data 125 is data when an abnormality occurs, and is data indicating the factor with an abnormality, the feature, and the degree of deviation of the feature thereof from the predicted range 124. In addition, the operational status data 126 is, as mentioned above, operational status data transmitted from the production facility 3.

The communication interface 13 is, for example, a wired Local Area Network (LAN) module, a wireless LAN module, etc., and is an interface for performing wired or wireless communication. In other words, the communication interface 13 is an example of a communication unit configured to communicate with other devices. The abnormality determination device 1 of the embodiment is connected to the production facility 3 via the communication interface 13.

The external interface 14 is an interface for connecting to an external device and is configured appropriately according to the external device to be connected. In the embodiment, the external interface 14 is connected to a display device 2. The display device 2 may use a known liquid crystal display, touch panel display, etc.

The input device 15 is, for example, a device for inputting such as a mouse, keyboard, etc.

The drive 16 is, for example, a Compact Disk (CD) drive, Digital Versatile Disk (DVD) drive, etc., and is a device for reading a program stored in a storage medium 17. The type of the drive 16 may be appropriately selected according to the type of the storage medium 17. At least a part of the various data 122-126 including the program 121 stored in the storage unit may be stored in the storage medium 17.

The storage medium 17 is a medium that stores information such as a program through electrical, magnetic, optical, mechanical, or chemical action so that a computer or other devices, machines, etc. is able to read the recorded information such as a program. In FIG. 4, a disk-type storage medium such as CD, DVD, etc. is illustrated as an example of the storage medium 17. However, the type of the storage medium 17 is not limited to a disk type and may be other than the disk type. As an example of a storage medium other than the disk type, semiconductor memory such as flash memory can be mentioned.

Regarding the specific hardware configuration of the abnormality determination device 1, depending on the embodiment, configuration elements may be omitted, substituted, or added as appropriate. For example, the control unit 11 may include multiple processors. The abnormality determination device 1 may be composed of multiple information processing devices. In addition, the abnormality determination device 1 may use an information processing device specifically designed for the service to be provided, or a general-purpose server device, etc.

<2-2. Functional configuration and abnormality determination>

Next, the functional configuration (software configuration) of the abnormality determination device 1 will be described. FIG. 5 is an example of the functional configuration of the abnormality determination device 1 according to the embodiment. The control unit 11 of the abnormality determination device 1 expands the program 121 stored in the storage unit 12 into RAM. Then, the control unit 11 interprets and executes the program 121 expanded in RAM by the CPU to control each of components. As a result, as shown in FIG. 5, the abnormality determination device 1 according to the embodiment functions as a computer including a feature acquisition unit 111, a model construction unit 112, an abnormality determination unit 113, and a deviation calculation unit 114.

<2-2-1. Acquisition of features>

The feature acquisition unit 111 acquires values of features calculated from the operational status data 126 indicating the operational status of the production facility 3, both during normal operation when the bonding mechanism correctly bonds the component 1 and the component 2, and during abnormal operation when the two components are not correctly bonded. However, for the operational status data 126 during normal operation, data extracted at multiple timings is used, while for the operational status data during abnormal operation, data extracted at one or multiple timings at which an abnormality is considered to have occurred is used. Then, the model construction unit 112 constructs the causal relationship model 122 showing the causal relationships between factors based on a predetermined algorithm that derives the relevance of each of features when bonding the component 1 and the component 2 from values of the features acquired during normal operation.

For example, the control unit 11 acquires features as follows. First, the control unit 11 divides the collected operational status data 126 into frames to define the processing range for calculating features. For example, the control unit 11 may divide the operational status data 126 into frames of a constant time length. However, the bonding mechanism does not need to operate at constant time intervals. Therefore, if the operational status data 126 is divided into frames of a constant time length, the operation of the bonding mechanism reflected in each of the frames may be misaligned.

Therefore, in the embodiment, the control unit 11 divides the operational status data 126 into frames for each of takt time. The takt time is the time required to produce a predetermined number of products, that is, to bond a predetermined number of the component 1 and the component 2. This takt time can be identified based on a signal controlling the bonding mechanism, for example, a control signal that controls the operation of each of servo motors of the bonding mechanism. The type of the control signal is not particularly limited as long as it is a signal that can be used to control the bonding mechanism.

Next, the control unit 11 calculates the values of features from each of the frames of the operational status data 126. For example, in the case where the operational status data 126 is quantitative data (such as descent time, bonding strength, component step) as mentioned above, the control unit 11 may calculate the features such as amplitude within the frame, maximum value, minimum value, average value, variance, standard deviation, autocorrelation coefficient, maximum value of power spectrum obtained by Fourier transform, skewness, and kurtosis.

Furthermore, the features may be derived not only from a single piece of the operational status data 126, but also from multiple pieces of the operational status data 126. For example, the control unit 11 may calculate the features such as a cross-correlation coefficient, a ratio, a difference, a synchronization deviation, a distance, etc. between corresponding frames of the operational status data 126.

In this way, the control unit 11 can acquire values of multiple types of features calculated from the operational status data 126 during normal operation. In addition, the features can also be calculated by performing preprocessing such as normalization and outlier removal on the values obtained as described above.

<2-2-2. Construction of causal relationship model>

The model construction unit 112 can construct a causal relationship model, for example, as follows, by treating each of acquired features as a probability variable, that is, by setting each of the acquired features to each of nodes.

(1) Construction of a graphical model

(1-1) Specify a hierarchical structure based on the chronological order in which each of the features occurs.
(1-2) Based on the hierarchical structure, determine a directed graph connecting each of the nodes with a directed line, using a partial correlation coefficient or a correlation error as a criterion.

The method of selecting the directed line is not particularly limited. There are methods of selecting based on fitness indices such as GFI or SRMR, as well as methods of selecting by focusing merely on a partial correlation coefficient and the like.

(2) Formulation by structural equation modeling

(2-1) Learn each of relational equations of the causal structure acquired in (1-2) based on the data. For a linear relationship, multiple regression can be used, and for a non-linear relationship, methods such as SVR (Support Vector Regression) can be used.
(2-2) In the case of poor fit, improvements such as logarithmic transformation of data or addition of interaction terms may be considered.

The method for constructing the causal relationship model is not limited thereto, and for example, by constructing a Bayesian network, causal relationships between each of factors may be derived. A known method may be used for constructing the Bayesian network. For example, structure learning algorithms such as the Greedy Search algorithm, Stingy Search algorithm, and exhaustive search method can be used for constructing the Bayesian network. In addition, evaluation criteria for the constructed Bayesian network can include Akaike's Information Criterion (AIC), C4.5, Cooper Herskovits Measure (CHM), Minimum Description Length (MDL), Maximum Likelihood (ML), etc. Furthermore, in the case where missing values are included in the learning data (operational status data 126) used for constructing the Bayesian network, a processing method such as the pairwise method and listwise method can be used.

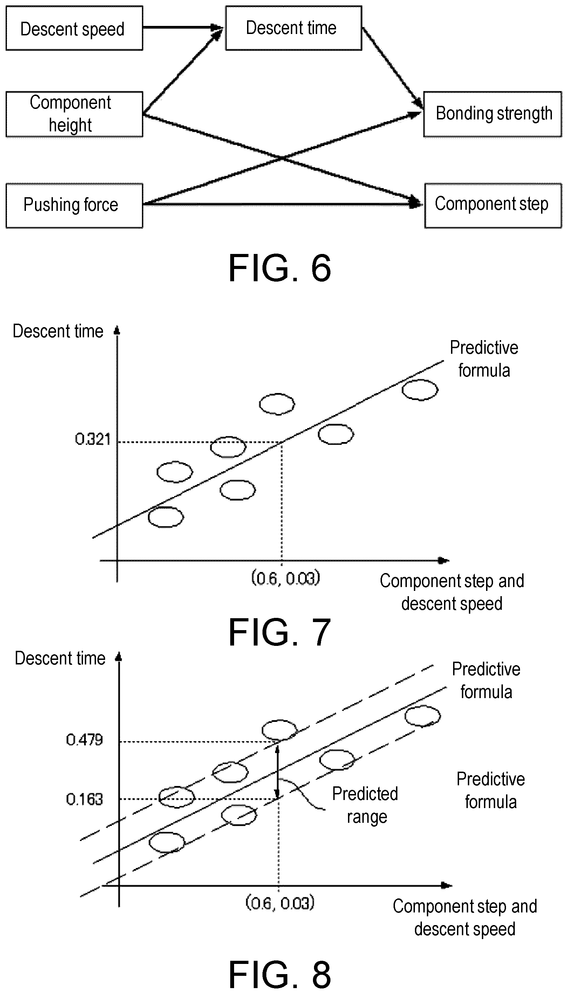

For example, FIG. 6 shows a causal relationship model of descent speed, component height, pressing force, descent time, bonding strength, and component step in the bonding mechanism of the embodiment. According to the causal relationship model, it can be seen that the descent speed and the component height affect the descent time, and the descent time and the pressing force affect the bonding strength. In other words, in the causal relationship model, the descent speed, the component height, and the pressing force become control factors (input), based on which the descent time becomes an intermediate response (output), and the bonding strength and the component step become final responses (output).

<2-2-3. Construction of predictive formula>

Next, the model construction unit 112 constructs a predictive formula for the intermediate response and the final response from the causal relationship model constructed as described above. In the embodiment, to predict an abnormality as shown in FIG. 3B in the bonding of the component 1 and the component 2, a predictive formula is constructed to calculate the descent time from the component height and the descent speed. Such a predictive formula can be constructed based on the obtained causal relationship model using multiple regression analysis, support vector machine (SVM), etc. In the embodiment, for example, the following formula (1) can be constructed as the predictive formula.

$$\text{Descent time} = 0.52 * \text{Component height} - 0.7 * \text{Descent speed} + 0.03 \quad (1)$$

When being illustrated, the predictive formula appears as shown in FIG. 7. In addition, the predictive formulas for the bonding strength and the component step can also be constructed. In other words, the predictive formula can be constructed for all intermediate responses and final responses.

<2-2-4. Specification of predicted range>

Next, the statistical distribution of the descent time during normal operation is calculated. This becomes the predicted range. For example, the prediction interval can be specified by the distribution (confidence interval) that can be defined from the obtained predictive formula, and the distribution (for example, $3\sigma$) considering the variation of data. Here, as an example, a 95% prediction interval is used. For instance, when the component height is 0.6 mm and the descent speed is 0.03 mm/s, the predicted value of the descent time is 0.321 s according to the above predictive formula (1), so the 95% prediction interval becomes 0.163 to 0.479. FIG. 8 shows the predicted range. Similarly, as mentioned above, predicted ranges can be specified for all intermediate responses and final responses (in the embodiment, the bonding strength and the component step). In this way, the predicted range can be specified by a set of variations in the predictive formula and variations in the data.

<2-2-5. Determination of abnormality>

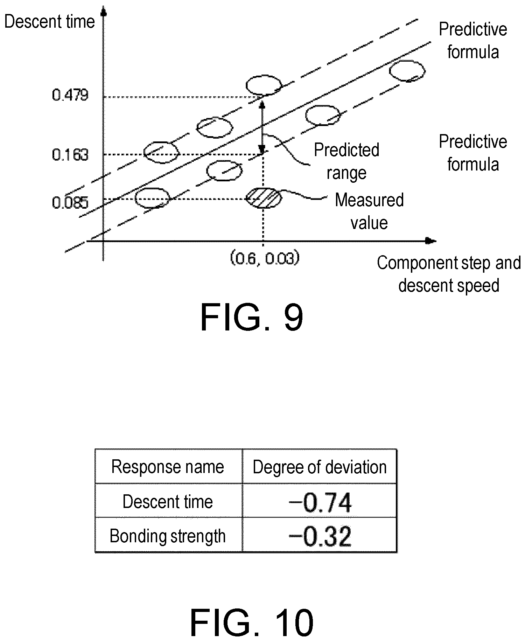

Subsequently, the abnormality determination unit 113 performs abnormality determination from the features calculated from the operational status data extracted when an abnormality is considered in the bonding mechanism. For example, to determine whether the descent time is abnormal or not, it is determined whether the descent speed corresponding to the obtained component height and descent speed falls within the predicted range specified as described above. For instance, as shown in FIG. 9, in the case where the measured descent time is 0.085 s when the component height is 0.6 mm and the descent speed is 0.03 mm/s, the descent time is outside the aforementioned predicted range, so it is determined that an abnormality has occurred. Similarly, as mentioned above, abnormality determination is performed for all intermediate responses and final responses (in the embodiment, the bonding strength and the component step). In this way, abnormality determination can be performed based on a single point of data.

<2-2-6. Calculation of degree of deviation>

Next, to determine the extent of abnormality for each of the features, the deviation calculation unit 114 calculates the degree of deviation. For example, the degree of deviation can be obtained by the ratio of the difference from the predicted value. In other words, from the above-mentioned numerical values, (predicted value (0.321) - measured value (0.085)) / predicted value (0.321) = - 0.74 can be used as the degree of deviation. Similarly, the degree of deviation is calculated in the case where an abnormality is determined in the bonding strength. The degree of deviation thus calculated can be displayed on the display device 2 as a list, for example, as shown in FIG. 10.

As described above, abnormality determination is performed, and if it is confirmed that an abnormality has occurred, the cause of the abnormality is investigated based thereon. For example, in the case where the descent time is shorter than the predicted value as mentioned above, an abnormality as shown in FIG. 3 can be considered. It should be noted that even if the measured value is outside the predicted range, an abnormality can be determined based on the degree of deviation rather than immediately determining the existence of an abnormality.

<3. Feature>

(1) By constructing the causal relationship model, predictive formula, and predicted range as described above, even not non-skilled persons can easily identify factors related to abnormalities that may occur in the production facility.
(2) According to the embodiment, since abnormality determination is performed by constructing a predicted range, abnormality determination can be performed without constructing, for example, a causal relationship model during abnormal operation. In other words, as described above, abnormality occurrence can be determined by extracting features in cases where an abnormality is thought to have occurred. Therefore, for example, it is not needed to stop the production facility 3 to acquire data for constructing a causal relationship model during abnormal operation. In particular, in the embodiment, abnormality determination can be performed even using data extracted at a single timing (a single point of data) at which an abnormality is thought to have occurred, thus reducing the cost and load required for abnormality determination.
(3) In the case where an abnormality is thought to have occurred, the degree of deviation for each of features is calculated, making it easy to determine the extent of the abnormality. Moreover, by displaying the degree of deviation along with the intermediate response or final response, the occurrence of an abnormality can be easily visually recognized.

<4. Modified example>

The embodiment of the present invention has been described in detail above, but the preceding description is merely illustrative of the present invention in all respects. It goes without saying that various improvements and modifications can be made without departing from the scope of the present invention. For example, the following modifications may be made. In the following, the same reference numerals are used for components similar to those in the above-mentioned embodiment, and descriptions of points similar to those in the above-mentioned embodiment are omitted as appropriate. The following modification examples can be combined as appropriate.

<4-1>

In the above-mentioned embodiment, the determination of an abnormality occurring in the process of bonding the component 1 and the component 2 was used as an example, but this is merely an example, and it goes without saying that the present invention can be applied to other processes.

<4-2>

In the above-mentioned embodiment, quantitative data was used as the operational status data, and features were calculated based thereon. However, for example, the operational status data 126 can also be qualitative data such as a sensor being on/off. In other words, features such as "on" time, "off" time, duty ratio, number of "on" occurrences, number of "off" occurrences, etc. within each of frames may be calculated.

<4-3>

The processing from the collection of operational status data 126 to the calculation of values of the features may be performed not by the abnormality determination device 1, but by the production facility 3 or various devices that control the production facility 3.

<4-4>

In the above-mentioned embodiment, the determination of an abnormality is performed based on a set (one point) of features in cases where an abnormality is considered. However, the features can be calculated from the operational status data 126 extracted at multiple timings and be used comprehensively to determine an abnormality. For example, the average of features calculated from multiple timings can be used.

<4-5>

In the above-mentioned embodiment, the determination results are displayed on the display device 2, but the determination results can also be notified by a method other than being displayed on the display device 2. For example, the occurrence of an abnormality can be notified by an auditory or visual alert. In addition, notification of the degree of deviation needs not be required, and merely the factor where the abnormality occurred can be notified, or merely the determination is performed and the determination results are examined retrospectively, such as after production. Reference Signs List
**[0057]**

　　1: Abnormality determination device
　　11: Control unit
　　12: Storage unit
　　3: Production facility

**Claims**

1.　An abnormality determination device, comprising:

　　a measuring means for measuring a plurality of factors that affect the quality of a product produced in a production facility;
　　a control unit; and
　　a storage unit, and

the storage unit storing
a causal relationship model that identifies causal relationships between the factors based on features calculated from the factors during production of normal products in the production facility,
a predictive formula that takes at least one of the features as input and another of the features different from the input as output based on the causal relationship model, and
a predicted range of the output, and
the control unit is configured to
determine whether the feature that becomes the output, among the features calculated from the factors measured in a production process of the production facility, is within the predicted range.

2. The abnormality determination device according to claim 1, wherein

the control unit is configured to
notify the factor related to the feature when the feature that becomes the output is outside the predicted range.

3. The abnormality determination device according to claim 2, wherein
configuration is such that a degree of deviation of the feature from the predicted range is calculated.

4. The abnormality determination device according to claim 3, wherein the control unit is configured to
display the factor notified and the degree of deviation corresponding to the factor.

5. The abnormality determination device according to claim 1, wherein the control unit is configured to
perform the determination using the features of a set of the factors that have been measured.

6. The abnormality determination device according to claim 1, wherein
the predicted range is defined based on a width of variation of a plurality of features derived from a plurality of normal data.

7. The abnormality determination device according to claim 1, wherein
another of the factors of which value exceeds the predicted range is outputted based on the factor in the product determined to be abnormal.

8. An abnormality determination method, comprising:

a step of identifying, among features calculated from a plurality of factors affecting the quality of a product produced in a production facility, causal relationships between the factors from the features during production of the product which is normal and generating a causal relationship model;
a step of generating a predictive formula based on the causal relationship model, with at least one of the features as input, and another of the features different from the input as output;
a step of generating a predicted range for the output;
a step of calculating the features from the factors measured in a production process of the production facility; and
a step of determining whether the feature that becomes the output, among the features calculated, is within the predicted range.

9. An abnormality determination program,
causing a computer to execute:

a step of identifying, among features calculated from a plurality of factors affecting the quality of a product produced in a production facility, causal relationships between the factors from the features during production of the product which is normal and generating a causal relationship model;
a step of generating a predictive formula based on the causal relationship model, with at least one of the features as input, and another of the features different from the input as output;
a step of generating a predicted range for the output;
a step of calculating the features from the factors measured in a production process of the production facility; and
a step of determining whether the feature that becomes the output, among the features calculated, is within the predicted range.

3

Production
facility

1

Abnormality determination device

# FIG. 1

Pressing member

Compo-
nent 1

Compo-
nent 2

Compo-
nent 2

Installation jig surface

# FIG. 2A

Pressing member

Compo-
nent 2

Compo-
nent 1

Compo-
nent 2

Installation jig surface

# FIG. 2B

Pressing member

Compo-
nent 1

Compo-
nent 2

Compo-
nent 2

Installation jig surface

Original installation jig surface

Foreign matter

# FIG. 3A

Pressing member

Compo-
nent 1

Compo-
nent 2

Compo-
nent 2

Installation jig surface

Original installation jig surface

Foreign matter

# FIG. 3B

FIG. 4

FIG. 5

FIG. 6

FIG. 7

FIG. 8

**FIG. 9**

| Response name | Degree of deviation |
|---|---|
| Descent time | −0.74 |
| Bonding strength | −0.32 |

**FIG. 10**

## INTERNATIONAL SEARCH REPORT

International application No.

**PCT/JP2023/018194**

### A. CLASSIFICATION OF SUBJECT MATTER

***G05B 19/418***(2006.01)i
FI:   G05B19/418 Z

According to International Patent Classification (IPC) or to both national classification and IPC

### B. FIELDS SEARCHED

Minimum documentation searched (classification system followed by classification symbols)

G05B19/418

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-149289 A (OMRON CORPORATION) 17 September 2020 (2020-09-17) entire text, all drawings | 1-9 |
| A | JP 2018-116545 A (OMRON CORPORATION) 26 July 2018 (2018-07-26) entire text, all drawings | 1-9 |
| A | JP 2021-92970 A (CANON KK) 17 June 2021 (2021-06-17) entire text, all drawings | 1-9 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **20 July 2023** | **08 August 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

| INTERNATIONAL SEARCH REPORT<br>Information on patent family members | | | | International application No.<br>**PCT/JP2023/018194** |
|---|---|---|---|---|
| **Patent document<br>cited in search report** | | | **Publication date<br>(day/month/year)** | **Patent family member(s)** | **Publication date<br>(day/month/year)** |

| Patent document cited in search report | | | Publication date (day/month/year) | Patent family member(s) | | | Publication date (day/month/year) |
|---|---|---|---|---|---|---|---|
| JP | 2020-149289 | A | 17 September 2020 | US | 2021/0191380 | A1 | |
| | | | | entire text, all drawings | | | |
| | | | | EP | 3940488 | A1 | |
| | | | | CN | 112534374 | A | |
| JP | 2018-116545 | A | 26 July 2018 | US | 2018/0203439 | A1 | |
| | | | | entire text, all drawings | | | |
| | | | | EP | 3352032 | A1 | |
| | | | | CN | 108334890 | A | |
| JP | 2021-92970 | A | 17 June 2021 | US | 2021/0173357 | A1 | |
| | | | | entire text, all drawings | | | |
| | | | | CN | 112947356 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018181158 A